# EUROPEAN PATENT APPLICATION

(11) **EP 3 708 336 A1**
(43) Date of publication of application: **16.09.2020**
(21) Application number: 19169675.6
(22) Date of filing: 16.04.2019
(51) Int. Cl.: B29C 64/124, A61C 13/00, A61C 13/01, A61C 13/10, B33Y 10/00

(54) **METHOD FOR GENERATING A PARTIALLY-CURED ITEM, A PARTIALLY-CURED ITEM AND A CURED OBJECT**

(30) Priority: 12.03.2019 EP 19162331
(71) Applicant: PRO3DURE MEDICAL GMBH, 44227 Dortmund (DE)
(72) Inventor: The designation of the inventor has not yet been filed
(74) Representative: Schulz Junghans Patentanwälte PartGmbB

(57) **Abstract**

The invention relates to a method for partial curing of an initial photoreactive material for 3D printing, comprising the steps of:
a) providing an item (1) comprising the initial photoreactive material for 3D printing,
b) a partial irradiation step comprising irradiating at least one curing section (20) of the initial photoreactive material for 3D printing of the item with a curing irradiation, yielding at least one cured section (120) of a partially-cured item (10), and at least one semi-curing section (40) of the initial photoreactive material of the item is irradiated with a semi-curing irradiation, yielding at least one semi-cured section (140) of the partially-cured item.

## Description

Generating objects by 3D printing is common in various areas. Detailed objects can be generated in a quick and cost-efficient manner.

In dental technology, 3D printing can for instance be used to generate full dental prosthesis, a partial dental prosthesis. Those dental objects comprise a denture in that at least one artificial tooth is inserted.

In state of the art approaches, the denture base comprises a hole in that the respective artificial tooth is inserted. Further, the tooth is adhered to the denture base. The denture base and the respective artificial tooth have to be configured such that they precisely fit to each other. This leads to high manufacturing costs and long production times. Further, an adhesive is necessary to fix the tooth to the denture base. The adhesive can only generate a minor chemical connection between the tooth and the denture base. When only a minor amount of adhesive is added, a gap between the denture base and the tooth can exist, where plaque can accumulate.

Therefore, a method is of interest to generate a 3-dimensional object in a cost-efficient manner. This is solved by the method according to the invention.

A first aspect of the invention is related to a method for partial curing of an initial photoreactive material for 3D printing. The method comprises the steps of providing an item comprising the initial photoreactive material for 3D printing and a partial irradiation step. The partial irradiation step comprises irradiating at least one curing section of the initial photoreactive material for 3D printing of the item with a curing irradiation, yielding at least one cured section of a partially-cured item and at least one semi-curing section of the initial photoreactive material of the item is irradiated with a semi-curing irradiation, yielding at least one semi-cured section of the partially-cured item.

The initial photoreactive material for 3D printing can also be referred to as the initial photoreactive material.

The item can be generated by a 3D printer. In an embodiment, the item is generated via a image projection method.

In an embodiment, the item is generated by a printer configured for digital light processing (DLP) printing. In an alternative embodiment, the item can be generated by a printer configured for laser-based stereolithography (SLA) printing. The item can be generated by a printer configured for LCD printing. In an embodiment, the printer is a OLED-based printer.

The item can comprise at least one curing section that can be cured by a curing irradiation during the partial irradiation step. In an embodiment, the item comprises a plurality of curing sections. Each curing section of the plurality of curing section can have a different shape and/or size. In an embodiment, multiple curing sections of the plurality of curing section have the same shape and/or size.

With the term "section" a spatial area is meant.

In an embodiment, each curing section of the plurality of curing sections is cured simultaneously.

The curing irradiation can be determined by a curing energy h·v_{c}, which is the energy content that impinges the curing section. The curing energy h·v_{c} can be determined by a frequency of a photon of the curing irradiation. The curing energy h·v_{c} can be determined by a wavelength of a photon of the curing irradiation.

The semi-curing irradiation can be determined by a semi-curing energy h·vₛ, which is the energy content that impinges the semi-curing section. The semi-curing energy h·vₛ can be determined by a frequency of a photon of the semi-curing irradiation. The semi-curing energy h·vₛ can be determined by a wavelength of a photon of the semi-curing irradiation.

With the term "semi-cured section" a section is meant whose initial photoreactive material is cured to some extend. It is not restricted to a curing that corresponds to half the curing of the cured section. The initial photoreactive material of the semi-cured section can also be cured to a lesser extend than half the curing of the cured section. In an embodiment, the initial photoreactive material of the semi-cured section is cured to a higher extend than half the curing of the cured section.

A semi-cured section can be softer than a cured section. In an embodiment, a semi-cured section is deformable.

In an embodiment, the semi-cured section is gel-like.

The curing irradiation can be provided by a curing light source emitting a curing light beam. The curing light source can be a uv-light source, in particular a uv light-emitting diode (uv-LED). According to an embodiment, the curing light source comprises a laser. In an embodiment, the curing light source emits a curing-image. In an embodiment, the curing light source can be a discharge lamp.

Semi-curing irradiation can be provided by a semi-curing light source emitting a semi-curing light beam. The curing light source can be a uv-light source, in particular a uv light-emitting diode (uv-LED). According to an embodiment, the semi-curing light source comprises a laser. In an embodiment, the semi-curing light source emits a semi-curing-image. In an embodiment, the semi-curing light source can be a discharge lamp.

In an embodiment, the curing irradiation and semi-curing irradiation are provided by a combined light source. In an embodiment, the combined light source emits an image. The combined light source can comprise a regulation device. The regulation device can be configured to regulate an energy that impinges the curing section and/or the semi-curing section. In particular, regulation device can regulate whether the curing energy h·v_{c} and/or the semi-curing energy h·vₛ impinges the item.

In an embodiment, the semi-curing light beam and/or the curing light beam can be deflected by at least one mirror, in particular at least one mirror of a digital micromirror device (DMD). In an embodiment, the semi-curing image and/or the curing image can be deflected by at least one mirror, in particular at least one mirror of a digital micromirror device (DMD). In an embodiment, the at least one mirror can be tilted. The tilt of the at least one mirror can be regulated. According to an embodiment, the tilt can be modified over time. Via regulating the tilt of the at least one mirror at least one characteristics of the curing irradiation and/or semi-curing irradiation can be regulated. In particular, an energy content of the curing light beam that impinges the curing section can be regulated. In an embodiment, an energy content of the semi-curing light beam can be regulated, that impinges the semi-curing section.

According to an embodiment, the tilting of the at least one mirror is regulated by the regulation device.

In an embodiment, the tilt of the at least one mirror is changed over time. This can also be referred to as time resolved tilting. The regulation device can be configured to regulate the time resolved tilting of the at least one mirror.

Via regulating the time resolved tilting, the regulation device can regulate which section is exposed to the semi-curing irradiation and/or the curing irradiation. Additionally, via regulating the time resolved tilting, the regulation device can regulate the duration of the irradiation of a curing section and/or a semi-curing section.

In an embodiment, the pixel size is about 27 µm. The lateral resolution can be 13,5µm.

According to an embodiment of the method, the at least one curing section of the initial photoreactive material of the item is irradiated via a focused light beam, yielding at least one cured section of the partially-cured item.

A focused light beam can expose light to a predefined area. Light-scattering of a focused light beam can be reduced.

In an alternative embodiment, the item is irradiated via an image.

In an embodiment, the at least one curing section is irradiated by light with a curing wavelength. The curing wavelength is between 300 nm and 500 nm, in particular between 350 nm and 450 nm, in particular between 365 nm and 425 nm.

The curing wavelength can determine the curing energy h·v_{c}.

In an embodiment, the at least one semi-curing section is irradiated by light with a semi-curing wavelength, wherein the semi-curing wavelength between 300 nm and 500 nm, in particular between 350 nm and 450 nm, in particular between 365 nm and 425 nm.

The semi-curing wavelength can determine the semi-curing energy h·vₛ with that the semi-curing section is irradiated.

In an embodiment, the curing wavelength is smaller than the semi-curing wavelength. This means that the curing energy h·v_{c} is higher than the semi-curing energy h·vₛ.

An embodiment is characterised in that the at least one curing section of the initial photoreactive material is exposed to a curing energy h·v_{c} and the at least one semi-curing section of the initial photoreactive material is exposed to a semi-curing energy h·vₛ.

In an embodiment, the at least one curing section is irradiated for a curing duration.

An embodiment is characterised in that the at least one semi-curing section is irradiated for a semi-curing duration.

In an embodiment, the curing duration is longer than the semi-curing duration.

In particular, a curing section can be cured for a longer time than a semi-curing section. This means that the curing duration is longer than the semi-curing duration.

The term "curing duration" means the duration the curing section is exposed to curing irradiation. The term "semi-curing duration" means the duration the semi-curing section is exposed to semi-curing irradiation.

In an embodiment, the semi-curing duration and/or curing duration is regulated by regulating the time resolved tilting of the at least one mirror.

In an embodiment, the curing duration and/or the semi-curing duration can be regulated via at least one mirror of a DMD. In an embodiment, the ratio between the curing duration and the semi-curing duration can be regulated by means of the at least one mirror, in particular by regulating the tilt of the at least one mirror.

In an embodiment, the same area is irradiated by a light beam, i.e. a curing light beam or the semi-curing light beam, as long as the at least one mirror is in a certain position. When the position of the at least one mirror changes, in particular when the tilt of the at least one mirror changes, the light beam can be directed to another area. In an embodiment, the curing duration and/or the semi-curing duration can be regulated by regulating the tilting of the at least one mirror.

In an embodiment, a plurality of different pixels can be generated by different frequencies of the tilting of at least one mirror, which couple different quantities of photons, i.e. energy contents, into the individual voxels.

In an embodiment, the at least one curing section of the initial photoreactive material is exposed to a curing energy for a curing duration and the at least one semi-curing section of the initial photoreactive material is exposed to a semi-curing energy for a semi-curing duration, such that a double bound turnover in the cured section is at least 2% larger than a double bound turnover in the semi-cured section.

In an embodiment, the energy impinging the initial photoreactive material provides a polymerisation of the initial photoreactive material. In particular, a double bound of the initial photoreactive material can react such that a crosslinking, i.e. polymerisation, can occur. The amount of a double bound turnover can indicate a rigidity of an item comprising the initial photoreactive material. The less double bounds are present, the more rigid, i.e. the harder, the item.

In an embodiment, ratio between the curing energy and the semi-curing energy is adjusted such that a turnover of the double bounds in the cured section is at least 2% larger than the turnover in the semi-cured section. In an alternative embodiment, the double bound turnover in the cured section is at least 5% larger. This means that the semi-cured section comprises more double bounds than the cured section. In other words this means that crosslinking in the cured section is higher than in the semi-cured section.

According to an embodiment, the initial photoreactive material for 3D printing comprises a 3D printing resin, in particular a polymer resin, in particular a photopolymer resin, in particular a resin comprising at least one of an acrylate, a methacrylate and an epoxide.

Another aspect of the invention is related to a partially-cured item comprising an initial photoreactive material for 3D printing comprising at least one cured section and at least one semi-cured section. In particular, the partially-cured item is generated by the method according to the invention. The partially-cured item is characterised in that a first deformation resistance which is the deformation resistance of the at least one cured section is larger than a second deformation resistance which is the deformation resistance of the at least one semi-cured section.

A semi-cured section can be softer than a cured section. In particular, the second deformation resistance of the semi-cured section is smaller than the first deformation of the cured section.

In an embodiment, the cured section is stable. The semi-cured section can be deformable. In an embodiment, the semi-cured section is gel-like.

In an embodiment, the partially-cured item comprises a plurality of cured sections. A partially-cured item can comprise a plurality of semi-cured sections.

In an embodiment, the second deformation resistance is less than 95% of the first deformation resistance, in particular less than 90% of the first deformation resistance.

An embodiment is characterised in that a turnover of the double bound is larger in the initial photoreactive material in the cured section than in the semi-cured section. This means that a higher content of double bounds of the initial photoreactive material of the cured section has already been used for polymerisation. In the semi-cured section, a smaller content of double bounds of the initial photoreactive material has been used for polymerisation. The amount of double bounds in the semi-cured section is higher than in the cured section.

In an embodiment, the double bound turnover in the cured section is at least 2% larger than the turnover in the semi-cured section. In an alternative embodiment, the turnover is at least 5% larger.

In an embodiment a partially-cured item comprises a plurality of semi-cured sections. The deformation resistance related to each semi-cured section can be equal. In an alternative embodiment, a deformation resistance of a first semi-cured section can differ from a deformation resistance of a second semi-cured section.

In an embodiment, the second deformation resistance is configured such that the semi-cured section is deformable such that the semi-cured section embeds a subject pressed in the semi-cured section.

An embodiment is characterised in that the partially-cured item comprises a partially-cured resin, in particular a partially-cured polymer resin, in particular a partially-cured photopolymer resin, in particular a partially-cured resin comprising at least one of an acrylate, a methacrylate and an epoxide.

In an embodiment, the partially cured item is a precursor of a dental item.

Dental items can be generated by 3D printing. The precursor of a dental item can comprise at least one support structure that is removed after the printing process.

In an embodiment, the at least one support structure comprises or consists of a semi-cured section. In particular, the at least one support structure can consist of a gel-like semi-cured section. A gel-like semi-cured section can be easily removed.

This is an advantage over state of the art approaches which comprise at least one stable support structure. A stable support structure can be removed via cutting. The material can be damaged. Further, a grinding and/or a polishing are necessary to remove remains at an attachment point at that the stable support structure is attached.

In an embodiment, the precursor of a dental item is a precursor of a full dental prosthesis, a partial dental prosthesis, a denture, a denture base, a drilling template, a gingival mask, and an occlusal splint.

Another aspect of the invention is related to a method for generating an object. The method comprises the steps of:
a) providing a partially-cured item comprising an initial photoreactive material for 3D printing comprising at least one cured section and at least one semi-cured section. In particular, the partially-cured item is generated according to the method according to the invention. In an embodiment, a partially-cured item according to the invention is provided.
b) providing an insertion element comprising at least one anchor section,
c) inserting the insertion element in the at least one semi-cured section of the partially-cured item such that the at least one semi-cured section embeds the at least one anchor section.

This means that an insertion element which comprises at least one anchor section is inserted in the at least one semi-cured section, wherein the at least one semi-cured section embeds the at least one anchor section.

The semi-cured section can directly contact the at least one anchor section. In particular, in an embodiment, no gap between the semi-cured section and the anchor section exists.

In an embodiment, the insertion element can be moved in the semi-cured section such that the position of the insertion element in relation to the partially-cured item can be easily adjusted.

According to the invention, the insertion element can be removed from the semi-cured section and re-inserted again to adjust the position of the insertion element in relation to the partially-cured item.

According to an embodiment, the anchor section directly contacts the initial photoreactive material for 3D printing.

In an embodiment, the method is characterised in that before step c) an adhesive is applied on an adhesion section of the insertion element.

In an embodiment, the method is characterised in that subsequent to step c) the method comprises the step of curing the at least one semi-cured section, yielding a cured object.

According to an embodiment, the at least one semi-cured section is exposed to a curing energy.

In an embodiment the curing energy is adjusted such the double bound turnover in the cured semi-cured section is equal to the in the double bound turnover in the cured section. This means that the cured at least one semi-cured section can be as rigid as the cured section. This means that the deformation resistance of the cured semi-cured section can be equal to the deformation resistance of the cured section.

According to an embodiment, the at least one semi-cured section is irradiated with light of a curing wavelength, wherein the curing wavelength is between 300 nm and 500 nm, in particular between 350 nm and 450 nm, in particular between 365 nm and 425 nm.

In an embodiment, the irradiation of the semi-cured section provides the curing of the respective section, wherein the curing provides a fixation of the insertion element, in particular a fixation of the anchor section.

In an embodiment, the curing at least one semi-cured section provides a chemical association between the anchor section of the insertion element and the respective cured semi-cured section.

In an alternative embodiment, the semi-cured section is cured via a chemical curing. In an embodiment, the curing is temperature-dependent. The semi-cured section can be cured by means of microwaves. Alternatively, the semi-cured section can be cured by heat.

A further aspect of the invention is related to a cured object comprising an insertion element comprising at least one anchor section embedded in a cured initial photoreactive material for 3D printing, characterised in that the at least one anchor section contacts the cured initial photoreactive material for 3D printing.

In particular, the anchor section directly contacts the cured initial photoreactive material. This means that in an embodiment, there is no gap between the anchor section and the cured initial photoreactive material.

In an embodiment, the cured object is a dental object.

The insertion element can be an artificial tooth.

In an embodiment, the dental object is one of a full dental prosthesis, a partial dental prosthesis, a denture, a denture base, a drilling template, a gingival mask, and an occlusal splint.

In the following, further features, advantages and embodiments of the present invention are explained with reference to the Figures, wherein
- Fig. 1: shows an item comprising a curing section and a semi-curing section,
- Fig. 2: shows curing of the curing section,
- Fig. 3: shows generation of a partially-cured item using a plurality of light sources,
- Fig.4A, Fig. 4B: shows generation of a partially-cured item using a mirror,
- Fig. 5: shows a side view of a partially cured item comprising a plurality of differently semi-cured layers,
- Fig. 6: shows a side view of a partially cured item,
- Fig. 7: shows a side view of a partially cured item,
- Fig. 8: shows a side view of a partially cured item,
- Fig. 9: shows a dental partially-cured item and an insertion element, and
- Fig. 10A, Fig. 10B: show a dental partially-cured item in that insertion elements are inserted.

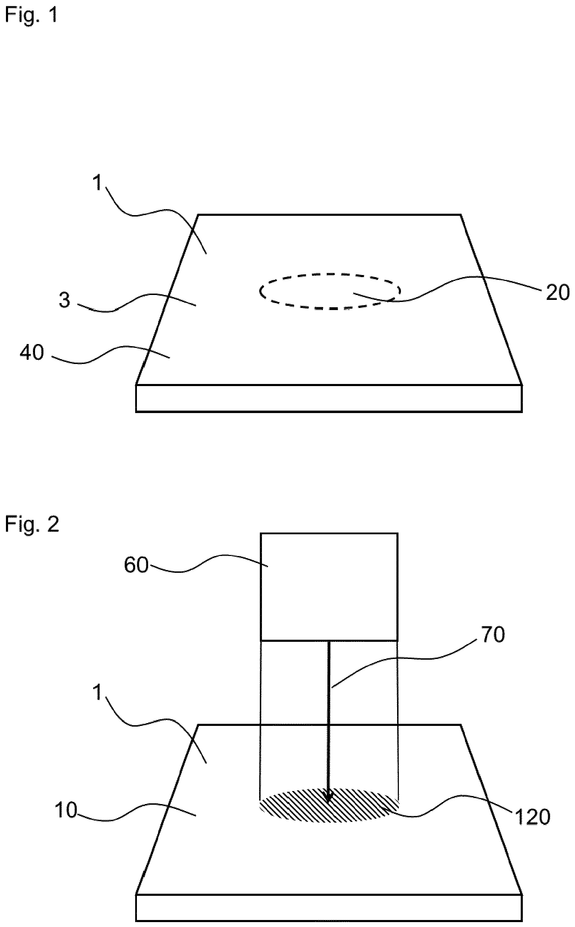

Fig. 1 shows an item 3 comprising an initial photoreactive material 1 for 3D printing. The item 3 can comprise a curing section 20. Further, the item 3 can comprise a semi-curing section 40. The semi-curing section 40 can adjoin the curing section 20.

Fig. 2 illustrates the generation of a partially-cured item 10 by a curing of a curing section by means of a focused light beam 70. The focused light beam 70 can be emitted by a focussing light source 60. Due to the irradiation by the focused light beam 70, the initial photoreactive material 1 of the curing section is cured, generating a cured section 120.

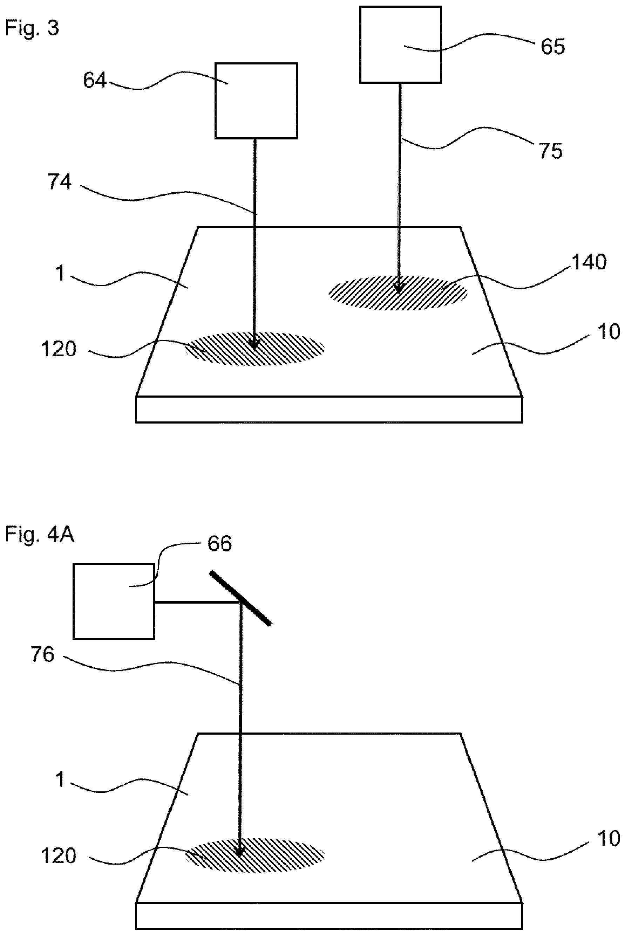

In Fig. 3 an embodiment is illustrated in that an item is exposed by a curing light source 64 generating a cured section 120, and a semi-curing light source 65 yielding a semi-cured section 140, generating a partially-cured item 10.

In an embodiment, the curing light source 64 emits a light ray 74 with a curing wavelength, in particular, light with a curing energy h·v_{c}. The semi-curing light source 65 can emit a semi-curing light ray 75 with a semi-curing wavelength, in particular, light with a semi-curing energy h·vₛ.

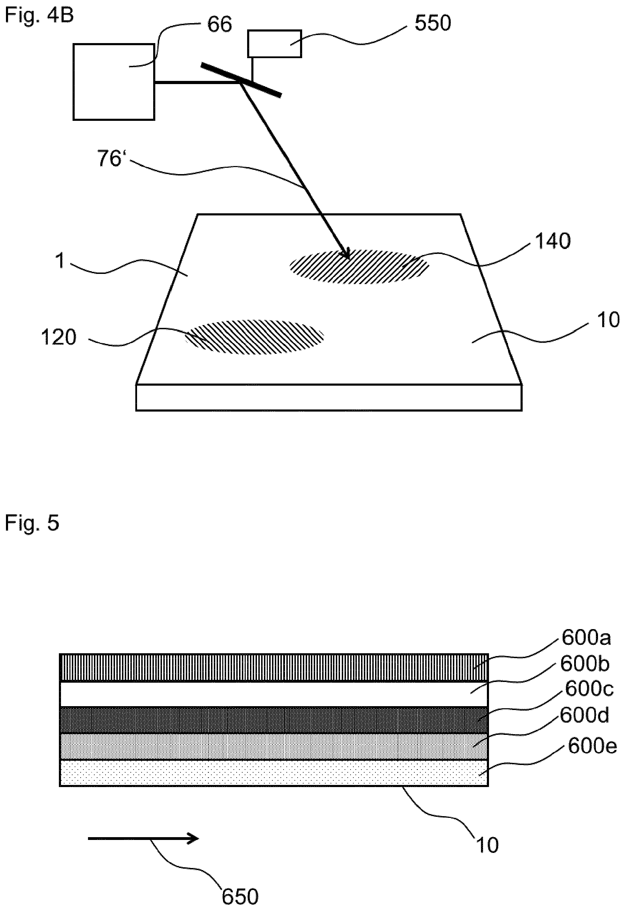

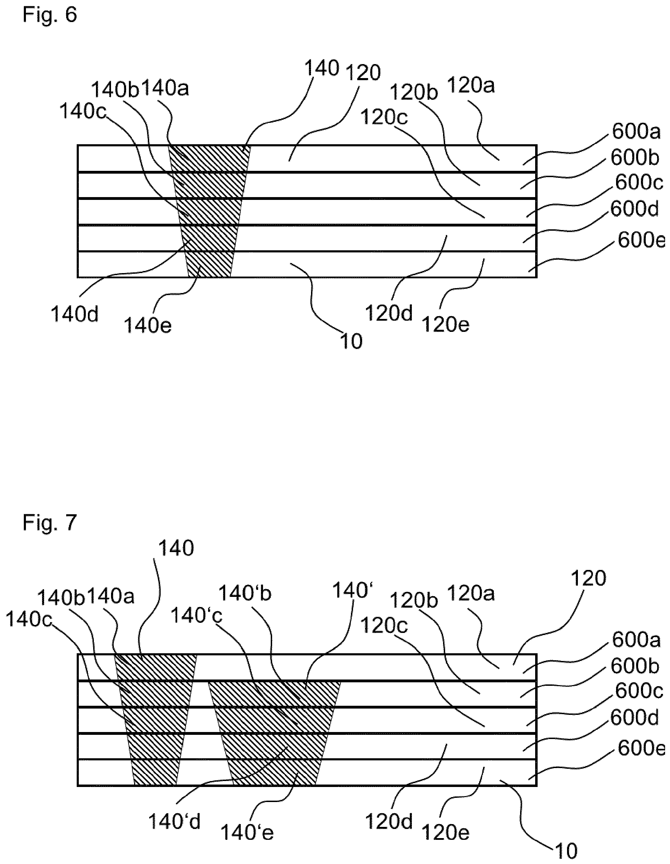

Fig. 4A and Fig. 4B show an embodiment of the method in that a mirror 500 directs a light ray 76, 76', emitted by a light source 66. The light ray 76, 76' can impinge the mirror 500 that can direct it towards the item 3. Depending on the position of the mirror 500, in particular a tilt in relation to the light source 66 and/or the item 3, the light ray 76, 76' can be directed to the cured section 120 (Fig. 7A) or the semi-cured section (Fig. 7B).

By regulating the position of the mirror 500, for instance via a mirror regulation device 550, the curing duration and/or the semi-curing duration can easily be regulated.

Fig. 5, Fig. 6, Fig. 7 and Fig.8 show side views of different embodiments of a partially-cured item 10.

The partially-cured item 10 can comprise a plurality of layers 600a, 600b, 600c, 600d, 600e. Each layer can be semi-cured by a different semi-curing energy h·vₛ and/or for a different semi-curing duration such that each layer 600a, 600b, 600c, 600d, 600e can have a different hardness (indicated by the different shading Fig. 7).

A layer 600a can extend in an extension direction 650.

In an embodiment, each layer 600a, 600b, 600c, 600d, 600e can comprise a respective cured section 120a, 120b, 120c, 120d, 120e and a respective semi-cured section 140a, 140b, 140c, 140d, 140e. The semi-cured section 140a, 140b, 140c, 140d, 140e can be arranged such that they adjoin each other, generating a semi-cured section 140 that spans the partially-cured item 10. In particular, semi-cured section 140a, 140b, 140c, 140d, 140e of neighbouring layers 600a, 600b, 600c, 600d, 600e adjoin each other perpendicular to the extension direction 650 (Fig. 6, Fig. 7).

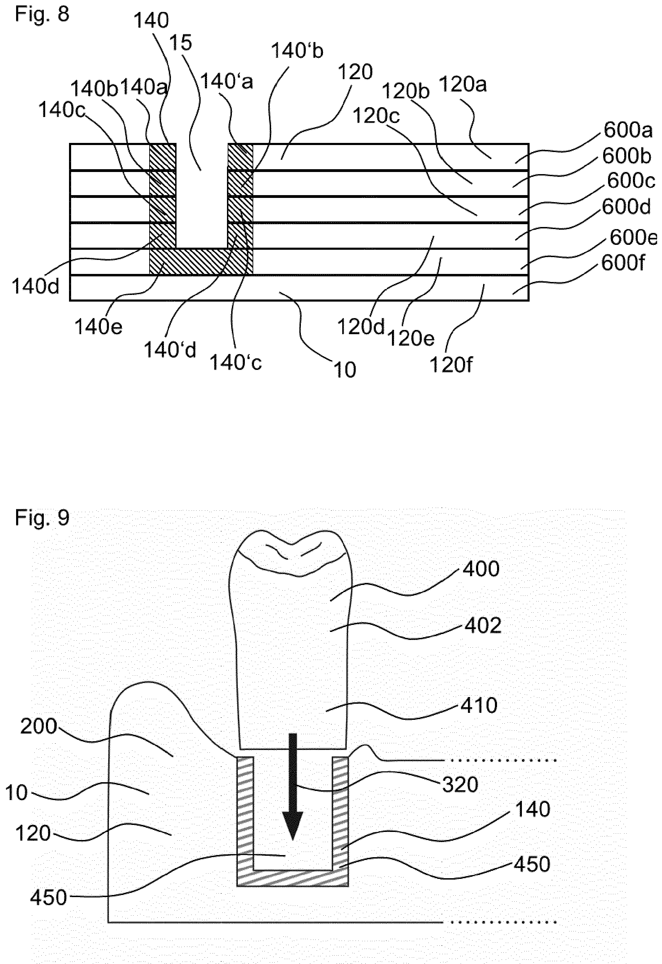

In an embodiment, the partially-cured item 10 comprises a plurality of semi-cured sections 140, 140' (Fig. 7, Fig. 8). This means that a layer can 600b, 600c, 600d, 600e can comprise a plurality of semi-cured section 140b, 140c, 140d, 140e, 140'b, 140'c, 140'd, 140'e.

In Fig. 7, an embodiment is shown in that at least one layer 600a exists that comprises a number of semi-cured sections 140a, that differs from the number of semi-cured sections of at least one other layer 600b, 600c, 600d, 600e. In other word this means that a semi-cured section 140' can be generated that extends into the partially-cured item 10 but that not span the partially-cured item 10.

In an embodiment, the layers 600a, 600b, 600c, 600d, 600e comprise a gap, such that the partially cured item 10 comprises a recess 15. The semi-cured sections 140b, 140c, 140d, 140e, 140'b, 140'c, 140'd of the layers can be positioned such that they border the recess 15 (Fig. 8).

Fig. 9 shows a sectional view of an embodiment of a partially-cured item 10 and of an embodiment of an insertion element 400. The partially cured item 10 can be a precursor of a dental object 200. It can comprise a cured section 120 and a semi-cured section 140.

In an embodiment, the semi-cured section 140 is configured such that it is a coat 451 of a cavity 450 of the partially cured item 10.

The insertion element 400 can be an artificial tooth 402. The insertion element 400 can comprise an anchor section 410.

In an embodiment, the insertion element 400 can be moved along an insertion direction 320 such that the insertion element 400 is inserted in the semi-cured section 140, in particular in the cavity 450. The semi-cured section 140 can be soft, in particular the semi-cured section 140 can be adjustable, in particular the semi-cured section 140 can be gel-like. In an embodiment, the semi-cured section 140 can adapt when the insertion element 400 is inserted in the semi-cured section 140. In particular, the semi-cured section 140 can adapt such that it directly contacts the insertion element 400, in particular the anchor section 410.

Hence, in an embodiment, when semi-cured section 140 can adapt, the cavity 450 does not need to exactly fit to the anchor section 410 of the insertion element 400. The semi-cured section 140 can be deformed by the insertion element 400 during insertion and can then adapt and directly attach to the insertion element 400, in particular to the anchor element 410.

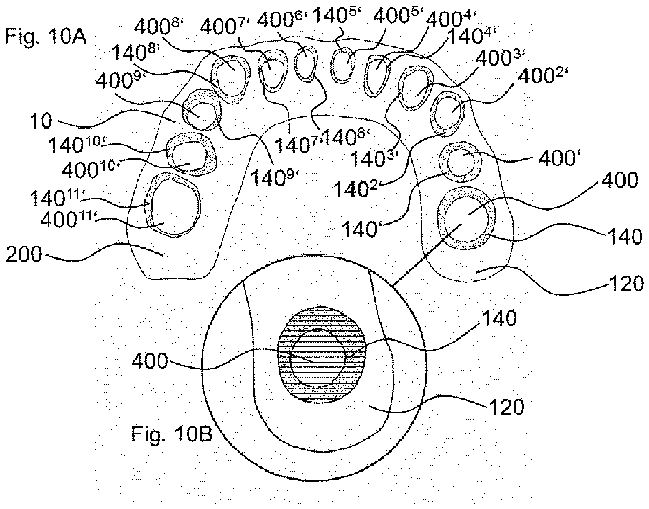

In Fig. 10A and 10B, a top view of a partially cured item 10 is shown in that a plurality of insertion elements 400, 400', 400²', 400³', 400⁴', 400⁵', 400⁶', 400⁷', 400⁸', 400⁹', 400¹⁰', 400¹¹' are inserted. Each insertion element 400, 400', 400²', 400³', 400⁴', 400⁵', 400⁶', 400⁷', 400⁸', 400⁹', 400¹⁰', 400¹¹' can be associated to each one respective semi-cured section 140, 140', 140²', 140³', 140⁴', 140⁵', 140⁶', 140⁷', 140⁸', 140⁹', 140¹⁰', 140¹¹'.

The partially cured item 10 can be a precursor of a dental item 200. In an embodiment, a semi-cured section 140, 140', 140²', 140³', 140⁴', 140⁵', 140⁶', 140⁷', 140⁸', 140⁹', 140¹⁰', 140¹¹' directly contacts the respective insertion element 400, 400', 400²', 400³', 400⁴', 400⁵', 400⁶', 400⁷', 400⁸', 400⁹', 400¹⁰', 400¹¹'. In other words this means that there is no gap between the semi-cured section 140, 140', 140²', 140³', 140⁴', 140⁵', 140⁶', 140⁷', 140⁸', 140⁹', 140¹⁰', 140¹¹' and the respective insertion element 400, 400', 400²', 400³', 400⁴', 400⁵', 400⁶', 400⁷', 400⁸', 400⁹', 400¹⁰', 400¹¹'. In other words this means that an insertion element 400, 400', 400²', 400³', 400⁴', 400⁵', 400⁶', 400⁷', 400⁸', 400⁹', 400¹⁰', 400¹¹' is embedded by the respective semi-cured section 140, 140', 140²', 140³', 140⁴', 140⁵', 140⁶', 140⁷', 140⁸', 140⁹', 140¹⁰', 140¹¹'.

In an embodiment, the partially cured item 10 can be cured, in particular a semi-cured section 140, 140', 140²', 140³', 140⁴', 140⁵', 140⁶', 140⁷', 140⁸', 140⁹', 140¹⁰', 140¹¹' can be cured. When a semi-cured section 140, 140', 140²', 140³', 140⁴', 140⁵', 140⁶', 140⁷', 140⁸', 140⁹', 140¹⁰', 140¹¹' is cured, it can fix the respective insertion element 400, 400', 400²', 400³', 400⁴', 400⁵', 400⁶', 400⁷', 400⁸', 400⁹', 400¹⁰', 400¹¹', in particular the anchor section of the respective insertion element. In an embodiment, the curing of the semi-cured section 140, 140', 140²', 140³', 140⁴', 140⁵', 140⁶', 140⁷', 140⁸', 140⁹', 140¹⁰', 140¹¹' can provide a chemical association between the anchor section of an insertion element and the respective cured semi-cured section. In an embodiment, the curing of the semi-cured section 140, 140', 140²', 140³', 140⁴', 140⁵', 140⁶', 140⁷', 140⁸', 140⁹', 140¹⁰', 140¹¹' can provide a mechanical fixation of anchor section of an insertion element in the respective cured semi-cured section.

In an embodiment, the width and/or a length of the partially-cured item 10 is about 12 to 16 cm (Fig. 10A).

## Claims

1. A method for partial curing of an initial photoreactive material for 3D printing, comprising the steps of:
a) providing an item (1) comprising the initial photoreactive material for 3D printing,
b) a partial irradiation step comprising irradiating at least one curing section (20) of the initial photoreactive material for 3D printing of the item with a curing irradiation, yielding at least one cured section (120) of a partially-cured item (10), and at least one semi-curing section (40) of the initial photoreactive material of the item is irradiated with a semi-curing irradiation, yielding at least one semi-cured section (140) of the partially-cured item.

2. The method according to claim 1, **characterised in that** the at least one curing section (20) of the initial photoreactive material of the item is irradiated via a focused light beam, yielding at least one cured section (120) of the partially-cured item.

3. The method according to one of claims 1 or 2, **characterised in that** the at least one curing section (20) is irradiated for a curing duration and **in that** the at least one semi-curing section (40) is irradiated for a semi-curing duration, wherein the curing duration is longer than the semi-curing duration.

4. The method according to one of claims 1 to 3, **characterised in that** the at least one curing section (20) of the initial photoreactive material is exposed to a curing energy for a curing duration and the at least one semi-curing section (40) of the initial photoreactive material is exposed to a semi-curing energy for a semi-curing duration, such that a double bound turnover in the cured section is at least 2% larger than a double bound turnover in the semi-cured section.

5. The method according to one of claims 1 to 4, **characterised in that** the initial photoreactive material for 3D printing comprises a 3D printing resin, in particular a polymer resin, in particular a photopolymer resin, in particular a resin comprising at least one of an acrylate, a methacrylate and an epoxide.

6. A partially-cured item (10) comprising an initial photoreactive material for 3D printing comprising at least one cured section (120) and at least one semi-cured section (140), in particular generated according to one of claims 1 to 5, **characterised in that** a first deformation resistance which is the deformation resistance of the at least one cured section (120) is larger than a second deformation resistance which is the deformation resistance of the at least one semi-cured section (140).

7. The partially-cured item (10) according to claim 6, **characterised in that** second deformation resistance is less than 95% of the first deformation resistance, in particular less than 90% of the first deformation resistance, in particular **in that** the second deformation resistance is configured such that the semi-cured section (140) is deformable such that the semi-cured section (140) embeds a subject pressed in the semi-cured section (140).

8. The partially-cured item (10) according to one of claims 6 or 7, **characterised in that** the partially-cured item (10) comprises a partially-cured resin, in particular a partially-cured polymer resin, in particular a partially-cured photopolymer resin, in particular a partially-cured resin comprising at least one of an acrylate, a methacrylate and an epoxide.

9. The partially-cured item (10) according to one of claims 6 to 8, **characterised in that** the partially cured item (10) is a precursor (200) of a dental item, in particular one of a precursor of a full dental prosthesis, a partial dental prosthesis, a denture, a denture base, a drilling template, a gingival mask, and an occlusal splint.

10. A method for generating an object, comprising the steps of:
a) providing a partially-cured item (10) comprising an initial photoreactive material for 3D printing comprising at least one cured section (120) and at least one semi-cured section (140), in particular generated according to one of the claims 1 to 5 and/or a partially-cured item (10) according to one of the claims 6 to 9,
b) providing an insertion element (400) comprising at least one anchor section (410),
c) inserting the insertion element (400) in the at least one semi-cured section (140) of the partially-cured item (10) such that the at least one semi-cured section (140) embeds the at least one anchor section (410).

11. The method according to claim 10, **characterised in that** the anchor section (410) directly contacts the initial photoreactive material for 3D printing.

12. The method according to one of the claims 10 or 11, **characterised in that** before step c) an adhesive is applied on an adhesion section of the insertion element (400) and/or **in that** subsequent to step c) the method comprises the step of curing the at least one semi-cured section (140), yielding a cured object.

13. The method according to one of the claims 10 to 12, **characterised in that** the at least one semi-cured section (140) is exposed to a curing energy.

14. A cured object comprising an insertion element comprising at least one anchor section (410) embedded in a cured initial photoreactive material for 3D printing, in particular generated according to one of the claims 10 to 13, **characterised in that** the at least one anchor section (410) contacts the cured initial photoreactive material for 3D printing.

15. The object according to claim 14, **characterised in that** the cured object is a dental object, in particular one of a full dental prosthesis, a partial dental prosthesis, a denture base, a denture, a drilling template, a gingival mask, and an occlusal splint.
